# EUROPÄISCHE PATENTSCHRIFT

(11) **EP 3 298 350 B1**
(45) Veröffentlichungstag und Bekanntmachung des Hinweises auf die Patenterteilung: **11.09.2019**
(21) Anmeldenummer: 16720415.5
(22) Anmeldetag: 03.05.2016
(51) Int. Cl.: G01B 21/04, G05B 19/00, H04L 9/32, H04W 12/06

(54) **SYSTEM UND VERFAHREN ZUM INTELLIGENTEN KOPPELN UND ANBINDEN MOBILER ENDGERÄTE AN EIN KOORDINATENMESSGERÄT**
SYSTEM AND METHOD FOR INTELLIGENTLY COUPLING AND CONNECTING MOBILE TERMINALS TO A COORDINATE-MEASURING DEVICE
SYSTÈME ET PROCÉDÉ DE COUPLAGE ET DE LIAISON INTELLIGENTS DE TERMINAUX MOBILES À UN APPAREIL DE MESURE DE COORDONNÉES

(30) Priorität: 22.05.2015 DE 102015108180
(43) Veröffentlichungstag der Anmeldung: 28.03.2018
(73) Patentinhaber: Carl Zeiss Industrielle Messtechnik GmbH, 73447 Oberkochen (DE)
(72) Erfinder: RIEK, Matthias, 73431 Aalen (DE)
(74) Vertreter: Witte, Weller & Partner Patentanwälte mbB
(86) Internationale Anmeldenummer: PCT/EP2016/059878
(87) Internationale Veröffentlichungsnummer: WO 2016/188713

(56) Entgegenhaltungen:
- DE-A1-102013 105 226
- US-A1- 2006 026 672
- US-A1- 2010 039 391
- US-A1- 2012 054 493
- Lewis Lineberger: "Encryption for Remote Control via Internet or Intranet", NASA Tech Briefs, 1. März 2005 (2005-03-01), XP055285378, Gefunden im Internet: URL:http://ntrs.nasa.gov/archive/nasa/casi .ntrs.nasa.gov/20110014772.pdf [gefunden am 2016-07-01]

## Beschreibung

Die vorliegende Erfindung betrifft ein Koordinatenmess-System zur sicheren und intelligenten Kopplung und Anbindung eines mobilen Endgeräts an ein stationär angeordnetes Koordinatenmessgerät. Die Erfindung betrifft ferner ein Verfahren zur sicheren und intelligenten Kopplung sowie Anbindung des mobilen Endgeräts an das stationär angeordnete Koordinatenmessgerät. Außerdem betrifft die Erfindung ein Koordinatenmessgerät sowie ein mobiles Endgerät, die zur Verwendung in einem derartigen Koordinatenmess-System eingerichtet sind. Schließlich wird ein Computerprogramm offenbart, das zum Ausführen des erfindungsgemäßen Verfahrens auf einer Datenverarbeitungsanlage eingerichtet ist.

Das Dokument DE 10 2010 045 071 A1 offenbart ein tragbares Höhenmess- und Anreißgerät zum dreidimensionalen Messen einer Position eines Objektes innerhalb eines ausgewählten Volumens und/oder Anreißen von Werkstücken bestehend aus mindestens einem beweglichen Arm, der ein Mess- oder Anreißwerkzeug trägt. Die Position des Mess- und/oder des Anreißwerkzeugs wird über Messmittel direkt oder indirekt an einen Rechner zur Bestimmung und Erfassung von Messwerten geleitet. Das Messwerkzeug weist ein Handstück auf, welches mit einem PDA (Personal Digital Assistant), einem Smartphone oder einem geeigneten Mobiltelefon kombinierbar ist. Diese mobilen (End-)Geräte werden direkt (verdrahtet) oder indirekt (drahtlos) an das Messgerät gekoppelt. Mittels geeigneter Software lassen sich auf dem jeweiligen Display die wesentlichen Funktionen, die aktuellen Koordinaten, Abweichungen und dergleichen darstellen. Mittels integrierter Steuerungs- und Eingabeelemente des jeweiligen Geräts, beispielsweise durch einen Touchscreen, eine Tastatur, einen Joystick oder dergleichen lassen sich die wesentlichen Funktionen der Messsoftware durch das jeweilige Gerät steuern.

Das Dokument DE 10 2010 045 071 A1 offenbart ein Koordinatensystem zur sicheren und intelligenten Kopplung und Anbindung eines mobilen Endgeräts an ein stationär angeordnetes Koordinatenmessgerät.

Das Dokument EP 2 505 959 A1 offenbart ein stationär angeordnetes Koordinatenmessgerät, das ein Messsystem, eine Steuerungseinheit für das Messsystem sowie eine entfernt anordenbare Auswertungseinheit aufweist. Zusätzlich ist ein mobiles Handgerät (hand-held device) vorgesehen, welches drahtlos, zum Beispiel über WLAN oder IR, mit der Steuerungseinheit und/oder der Auswertungseinheit kommuniziert, um beispielsweise einen Tastkopf des Messsystems im Raum zu bewegen, indem das Handgerät entsprechend im Raum bewegt wird, wobei die Bewegungen des Handgeräts zum Beispiel über Inertialsensoren erfasst wird. Beim Handgerät kann es sich insbesondere um einen Tablet-Computer handeln, auf dem ferner die gemessenen Positionen darstellbar sind.

Das Dokument US 2006/0135065 A1 offenbart eine Bluetooth-Vorrichtung und ein Verfahren zum Vorsehen eines Dienstes, der durch einen Bluetooth-Pin bestimmt ist.

Das Dokument US 2010/039391 A1 offenbart in seiner Fig. 1 ein Koordinatenmess-System zur sicheren und intelligenten Kopplung und Anbindung eines mobilen, physikalisch getrennten Endgeräts (Jogbox 10) an ein stationär angeordnetes Koordinatenmessgerät.

Generell werden nachfolgend Koordinatenmessgeräte beschrieben, d.h. Geräte mit einem Messsystem bzw. Messkopf, der innerhalb eines definierten Messvolumens relativ zu einem Werkstück bewegbar ist. Mit dem Messkopf werden definierte Messpunkte an dem Werkstück abgefahren und vermessen. Häufig besitzt der Messkopf zu diesem Zweck ein Tastelement, insbesondere in Form eines Taststiftes mit einem kugelförmigen freien Ende, mit dem die gewünschten Messpunkte an dem Werkstück physisch berührt werden. Daher wird ein solcher Messkopf häufig als Tastkopf bezeichnet. Alternativ gibt es Messköpfe, mit denen definierte Messpunkte an einem Werkstück berührungslos vermessen werden können, insbesondere mit optischen Sensoren. Eine Steuerungs- und Auswertungseinheit bestimmt aus der Position des Messkopfes innerhalb des Messvolumens und gegebenenfalls aus der Position des Tastelements relativ zum Messkopf beim Antasten des Werkstücks Raumkoordinaten, die den angetasteten Messpunkt bzw. das zu vermessende Objekt repräsentieren. Bestimmt man die Raumkoordinaten an einer Vielzahl von Messpunkten, kann man geometrische Eigenschaften des Werkstücks vermessen, wie etwa den Durchmesser einer Bohrung oder den räumlichen Abstand von zwei Geometrieelementen an dem Werkstück. Darüber hinaus kann man mit einer Vielzahl von Raumkoordinaten Messkurven bestimmen, die die Raumform einzelner Geometrieelement oder sogar die Raumform des gesamten Werkstücks repräsentieren. Häufig werden geometrische Abmessungen, wie etwa der Durchmesser einer Bohrung oder der Abstand zwischen zwei Geometrieelementen, erst anhand der Messkurven bestimmt.

Da die Koordinatenmessgeräte üblicherweise sehr teuer und komplex aufgebaut sind, ist es in dem Fall, dass mobile Endgeräte zur Bedienung des Koordinatenmessgeräts eingesetzt werden, wünschenswert, den Aufbau einer drahtlosen Verbindung zwischen dem Koordinatenmessgerät und dem mobilen Endgerät zu kontrollieren, d.h. den Verbindungsaufbau und den Datenaustausch hinsichtlich einer Autorisierung und einer Authentizität des Nutzers des mobilen Endgeräts zu verifizieren.

Ferner kommt es recht häufig vor, dass mehrere Koordinatenmesssysteme in unmittelbarer Nähe zueinander, zum Beispiel in einem einzigen Raum, gleichzeitig betrieben werden. Deswegen ist es wünschenswert, sicherzustellen, dass eine drahtlose Verbindung nur zwischen dem ausgewählten Koordinatenmessgerät und dem mobilen Endgerät aufgebaut wird und erfolgt. Ferner soll die Verbindung sicher sein und vom autorisierten Nutzer aufgebaut werden können.

Des Weiteren ist es wünschenswert, die Einsatzmöglichkeiten des mobilen Endgeräts in Abhängigkeit von einem Grad einer Zugriffsberechtigung zu kontrollieren. So sollen einem Endnutzer beispielsweise im Wesentlichen nur Daten dargestellt werden und einfache ungefährliche Steuerungsoptionen bereitgestellt werden. Einem Service-Techniker hingegen sollen weitergehende Manipulationsoptionen ermöglicht werden. Der Service-Techniker soll beispielsweise Grundparameter des Koordinatenmessgeräts direkt vor Ort ändern können, die bei einer unsachgemäßen Einstellung zur Beschädigung oder sogar zur Zerstörung des Koordinatenmessgeräts führen können. Oft ist es der Fall, dass die Steuerungseinheit und/oder die Auswerteeinheit entfernt zum Messsystem angeordnet sind, was eine Einstellung dieser Parameter am Ort des Messsystems unmöglich macht.

Es ist daher eine Aufgabe der vorliegenden Erfindung, ein sichere und intelligentes System und Verfahren zum Koppeln und Verbinden eines Koordinatenmessgeräts mit einem mobilen Endgerät bereitzustellen.

Die Aufgabe wird gelöst durch ein Koordinatenmess-System nach Anspruch 1 sowie durch ein entsprechend eingerichtetes Koordinatenmessgerät nach Anspruch 8 und ein entsprechend eingerichtetes mobiles Endgerät nach Anspruch 9.

Jede spezifische Drahtlosverbindung zwischen dem mobilen Endgerät und einem Koordinatenmessgerät ist durch den Identifikator bzw. den statischen Schlüssel eindeutig gekennzeichnet und identifizierbar. Der Verbindungsaufbau ist sicher, da er nur in Kenntnis des dynamischen Schlüssels erfolgen kann, der durch das jeweilige Koordinatenmessgerät bzw. dessen Auswerte- und Steuereinheit bestimmt ist. Somit ist es ausgeschlossen, dass ein nicht autorisierter Nutzer eine Drahtlosverbindung von seinem (nicht autorisierten) mobilen Endgerät zu einem der Koordinatenmessgeräte aufbauen kann.

Ferner ist sichergestellt, dass immer nur für das gewünschte Koordinatenmessgerät eine Drahtlosverbindung aufgebaut wird.

Der dynamische erste Schlüssel ist Koordinatenmessgerät-spezifisch und der Identifikator ist ein Koordinatenmessgerät-spezifischer statischer zweiter Schlüssel, der insbesondere in der ersten Speichereinheit hinterlegt ist.

Jedes der Koordinatenmessgeräte erhält einen eigenen dynamischen ersten Schlüssel, über den die Authentifizierung maschinenspezifisch erfolgt. Der erste Schlüssel ist dynamisch, weil er veränderbar ist. Der zweite Schlüssel ist statisch, weil er üblicherweise nach seiner ursprünglichen Festlegung nicht mehr geändert wird.

Die Auswerte- und Steuerungseinheit ist eingerichtet, gemäß einer Erzeugungsvorschrift, die in der ersten Speichereinheit hinterlegt ist, basierend auf dem dynamischen ersten Schlüssel und dem statischen zweiten Schlüssel einen Koordinatenmessgerät-spezifischen Autorisierungsschlüssel zu erzeugen und den erzeugten Autorisierungsschlüssel in der ersten Speichereinheit zu hinterlegen, wobei die drahtlose Verbindung anhand des so erzeugten Autorisierungsschlüssels authentifiziert wird; und wobei das mobile Endgerät eingerichtet ist, den statischen zweiten Schlüssel abzufragen und dann in Kenntnis des dynamischen ersten Schlüssels und des statischen zweiten Schlüssels gemäß der Erzeugungsvorschrift, die auch in der zweiten Speichereinheit hinterlegt ist, den gleichen Autorisierungsschlüssel zu erzeugen und in der zweiten Speichereinheit für den authentifizierten Aufbau der drahtlosen Verbindung zu hinterlegen.

Durch die Berechnung des Autorisierungsschlüssels unter Verwendung des ersten Schlüssels und des zweiten Schlüssels ist der Verbindungsaufbau sicher. Der Autorisierungsschlüssel ist gegenüber Attacken von außen sicher, selbst wenn es einem Angreifer gelingt, den dynamischen Schlüssel in Erfahrung zu bringen. Den statischen Schlüssel in Erfahrung zu bringen ist in der Regel einfach. Den dynamischen Schlüssel in Erfahrung zu bringen ist schon schwieriger, weil dazu Zugriff auf das Koordinatenmessgerät benötigt wird. Ohne die richtige Erzeugungsvorschrift ist die Erzeugung des Autorisierungsschlüssels jedoch unmöglich.

Bei einer anderen Ausgestaltung repräsentiert der statische zweite Schlüssel einen Gerätetyp des Koordinatenmessgeräts, eine Seriennummer des Koordinatenmessgeräts, ein Herstellungsdatum des Koordinatenmessgeräts, einen Herstellungsort des Koordinatenmessgeräts und/oder eine SAP-Nummer des Koordinatenmessgeräts.

Die oben genannten Implementierungen stellen Identifikatoren da, über die jedes der Koordinatenmessgeräte von Anfang an verfügt und die das jeweilige Koordinatenmessgerät eindeutig identifizieren.

Bei einer weiteren Ausgestaltung identifiziert der statische zweite Schlüssel die drahtlose Verbindung eindeutig.

Bei einer Ausgestaltung ist der dynamische erste Schlüssel ein alphanumerisches Passwort und/oder Signaturdatei.

Bei einer weiteren Ausgestaltung ist der statische zweite Schlüssel in einen optisch lesbarer QR-Code und/oder elektronisch lesbar in einen NFC-Chip oder RFID-Chip eingebettet, wobei der QR-Code und/oder der NFC-Chip bzw. RFID-Chip an dem Koordinatenmessgerät angebracht ist bzw. sind und wobei das mobile Endgerät eine Leseeinheit aufweist, die zum Lesen des QR-Codes und/oder des NFC-Chips bzw. RFID-Chips eingerichtet ist.

Insbesondere weist das mobile Endgerät einen Schlüssel-Port auf, über den der Nutzer den vom Koordinatenmessgerät ausgegebenen, dynamischen ersten Schlüssel importierbar ist, wobei das Koordinatenmessgerät einen weiteren Schlüssel-Port aufweist, über den der dynamische erste Schlüssel exportierbar ist.

Die Schlüssel-Ports erlauben den physischen Transport des dynamischen Schlüssels vom jeweiligen Koordinatenmessgerät zum mobilen Endgerät. Als Transportmedium kann beispielsweise ein USB-Stick eingesetzt werden, den der Nutzer physisch aus der Auswerte- und Steuereinrichtung ausliest und physisch in das mobile Endgerät einliest.

Vorzugsweise weist die Auswerte- und Steuerungseinheit eine Auswertungseinrichtung und eine Steuerungseinrichtung auf, wobei die Auswertungseinrichtung vorzugsweise entfernt zum Messsystem und zur Steuerungseinrichtung angeordnet ist.

Die Aufgabe wird ferner gelöst durch ein Verfahren nach Anspruch 10.

Insbesondere weist das Verfahren ferner auf: Importieren des statischen zweiten Schlüssels in das mobile Endgerät durch den Nutzer; Erzeugen eines Koordinatenmessgerät-spezifischen Autorisierungsschlüssels basierend auf dem dynamischen ersten Schlüssel und dem statischen zweiten Schlüssel gemäß einer Erzeugungsvorschrift durch das Koordinatenmessgerät und das mobile Endgerät, wobei die Erzeugungsvorschrift in dem Koordinatenmessgerät und in dem mobilen Endgerät hinterlegt ist; und Hinterlegen des Verbindungschlüssels in dem Koordinatenmessgerät und in dem mobilen Endgerät; Authentifizieren des Aufbaus der drahtlosen Verbindung durch Verwendung des Autorisierungsschlüssels.

Vorzugsweise weist der Schritt des Importierens der Schlüssel auf: Auslesen des dynamischen ersten Schlüssels aus dem Koordinatenmessgerät auf ein Datenspeichermedium durch den Nutzer; Einlesen des ausgelesenen dynamischen ersten Schlüssels vom Datenspeichermedium in das mobile Endgerät durch den Nutzer; und Einlesen des statischen zweiten Schlüssels durch Scannen des zweiten statischen Schlüssels, der an dem Koordinatenmessgerät frei zugänglich angebracht ist, durch den Nutzer mittels des mobilen Endgeräts.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagramm eines Koordinatenmesssystems gemäß der Erfindung;
- Fig. 2a-c: Blockdiagramme von verschiedenen Autorisierungsschlüsseln;
- Fig. 3: ein Flussdiagramm eines Verfahrens gemäß der Erfindung; und
- Fig. 4: eine weitere Ausführungsform eines nachgerüsteten Koordinatenmesssystems mit zwei unterschiedlichen Drahtlosverbindungen.

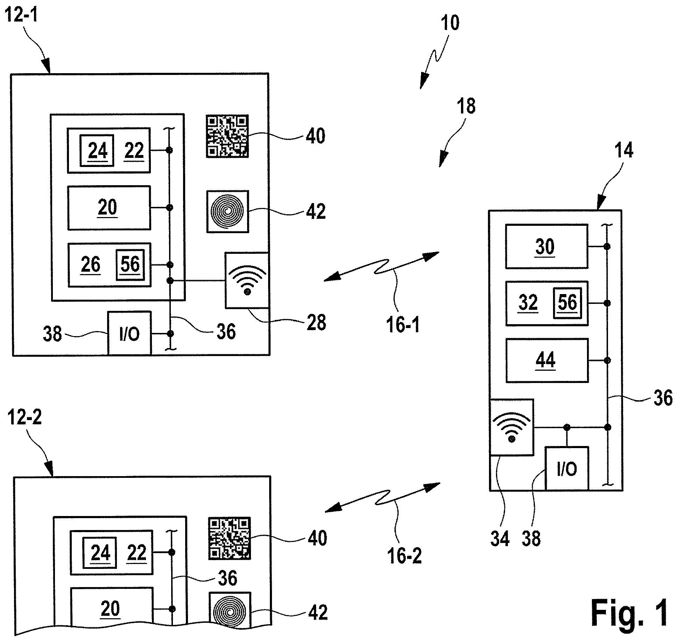

Fig. 1 zeigt ein Blockdiagramm eines Koordinatenmess-Systems 10 der Erfindung, das nachfolgend kurz auch nur als System 10 bezeichnet werden wird. Das System 10 weist mindestens ein Koordinatenmessgerät 12 sowie ein mobiles Endgerät 14 auf. In der Fig. 1 sind exemplarisch zwei Koordinatenmessgeräte 12-1 und 12-2 gezeigt. Die Koordinatenmessgeräte 12 und das mobile Endgerät 14 kommunizieren über Koordinatenmessgerätspezifische drahtlose Verbindungen 16 miteinander. Die Koordinatenmessgeräte 12 und das mobile Endgerät 14 tauschen Daten über die drahtlosen Verbindungen 16 miteinander aus. Diese Daten können zum Beispiel zur Visualisierung von zu vermessenden Werkstücken auf dem mobilen Endgerät 14 eingesetzt werden. Diese Daten können auch zum Steuern des Koordinatenmessgeräts 16 durch einen (nicht dargestellten) Nutzer eingesetzt werden, der das mobile Endgerät 14 bedient. Das mobile Endgerät 14 kann als "Fernbedienung" für das Gerät 12 benutzt werden.

Jedes der Koordinatenmessgeräte 12 weist eine Auswerte- und Steuerungseinheit 22 mit mindestens einer Datenverarbeitungseinheit 24 (z.B. Mikroprozessor, CPU, o.Ä.), ein Messsystem 20 mit einem hier nicht näher gezeigten und bezeichneten Messkopf, eine erste Speichereinheit 26 zur Speicherung von Daten, Parametern und Programmen sowie eine Sender/Empfänger-Einheit 28 für eine drahtlose Kommunikation mit dem mobilen Endgerät 14 auf. Eine mögliche Implementierung des Koordinatenmessgeräts 12 ist exemplarisch, insbesondere im Zusammenhang mit der Fig. 1, in der DE 10 2013 106 059 A1 beschrieben.

Das mobile Endgerät 14 ist physisch von dem oder den Koordinatenmessgeräten 12 getrennt. Das mobile Endgerät 14 kann frei im Raum und insbesondere in unmittelbarer Nähe zum Messsystem 20 der Koordinatenmessgeräte 12 vom Endnutzer bewegt werden. Das mobile Endgerät 14 ist zum Bedienen von jedem der Koordinatenmessgeräte 12 eingerichtet, die sich wiederum in ihrem Typ unterscheiden können. Das mobile Endgerät 14 ist ferner zum Anzeigen von Daten von jedem der Koordinatenmessgeräte 12 eingerichtet. Das mobile Endgerät 14 weist zumindest eine eigene Datenverarbeitungseinheit 30 (z.B. Mikroprozessor, CPU, o.Ä.), eine eigene Speichereinheit 32 zur Speicherung von Daten und Programmen sowie eine eigene Sender/Empfänger-Einheit 34 für die drahtlose Kommunikation mit jedem der Koordinatenmessgeräte 12 auf.

Das mobile Endgerät 14 kann als mobiles Datenterminal (MDT) implementiert sein. Ein MDT ist ein Gerät zur Erfassung und Speicherung von Daten, ohne dabei (physisch) an einen Computer-Arbeitsplatz gekoppelt zu sein. Die Daten, die üblicherweise in Echtzeit erfasst werden, werden über die drahtlose Verbindung 16 (z.B. Funk oder Infrarot) an die Auswerte- und Steuereinheit 22 des entsprechenden Koordinatenmessgeräts 12 weitergeleitet und übertragen. Das mobile Endgerät 14 kann ein Tablet-Computer (z.B. iPad), ein PDA, ein Smartphone oder ein ähnliches mobiles datenverarbeitendes und datenanzeigendes Gerät sein, das über entsprechende Anzeigeeinrichtungen, Dateneingabeeinrichtungen, Datenaustausch-Schnittstellen und Ähnliches verfügt.

Wie in Fig. 1 gezeigt, sind die oben beschriebenen Komponenten des mobilen Endgeräts 14 miteinander verbunden, um hier nicht näher gezeigte und beschriebene Daten miteinander auszutauschen. Neben den oben beschriebenen Komponenten 30 bis 34 kann das mobile Endgerät 14 ferner eine Eingang/Ausgang-Schnittstelle 38 aufweisen, um Daten in das mobile Endgerät 14 zu importieren oder um Daten aus dem mobilen Endgerät 14 zu exportieren, wie es nachfolgend noch näher erläutert werden wird. Die Schnittstelle 18 kann zum Beispiel durch einen USB-Port realisiert sein.

Das mobile Endgerät 14 ist dazu eingerichtet, mit einer proprietären Software (z.B. einer App) betrieben zu werden, die von dem Hersteller des Koordinatenmesssystems 10 bzw. dem Hersteller des Koordinatenmessgeräts 12 bereitgestellt wird. Diese Software, die vorliegend nicht näher gezeigt und bezeichnet ist und die nachfolgend noch näher beschrieben werden wird, ist zur Bedienung des Koordinatenmessgeräts 12 und/oder zum Anzeigen von Daten des Koordinatenmessgeräts 12 eingerichtet. Die Software kann zum Beispiel über eine Online-Plattform heruntergeladen und auf dem mobilen Endgerät 14 installiert werden. Diese Software enthält einen oder mehrere Algorithmen, die zum sicheren und intelligenten Aufbauen einer authentifizierten Verbindung und zum Koppeln des mobilen Endgeräts 14 an das Koordinatenmessgerät 12 benötigt werden, wie es ebenfalls nachfolgend noch näher erläutert werden wird. Diese Software ist auch zur Authentifizierung eingerichtet. Unter einer Authentifizierung wird nachfolgend ein Nachweis (Verifizierung) einer behaupteten Eigenschaft einer Entität verstanden, wie beispielsweise die Autorisierung bzw. Berechtigung des Nutzers, bestimmte Funktionalitäten des Koordinatenmessgeräts 12 zu nutzen und/oder zu verändern. Im vorliegenden Fall wird ein Zugriff auf einen gesicherten Bereich des Systems 10 gewährt. Der Nutzer authentisiert sich, indem er einen Schlüssel angibt. Die Software führt anschließend die Authentifizierung durch, also insbesondere die Verifizierung der Authentizität, d.h. die Prüfung der Echtheit. Erst wenn diese Verifizierung erfolgreich ist, werden dem Nutzer des mobilen Endgeräts 14 zuvor definierte Zugriffsberechtigungen im Rahmen seiner Autorisierung für die Dauer einer Sitzung zugewiesen. Das Programm stellt also die Autorisierung des Kommunikationspartners (d.h. des mobilen Endgeräts 14 bzw. des Nutzers) fest. Die Authentifizierung erfolgt vorliegend durch die Kenntnis einer Information (z.B. Passwort) oder durch die Verwendung eines Besitztums (z.B. Signaturdatei), wie es nachfolgend noch näher erläutert werden wird.

Die Authentifizierung beim Verbindungsaufbau basiert vorzugsweise auf einem Schlüssel, wie es nachfolgend noch näher erläutert werden wird. Teile des Schlüssels können in einen QR-Code 40 und/oder einen NFC-Chip 42 eingebettet sein.

Ein QR-Code (Englisch: Quick Response Code) ist ein zweidimensionales optisch erfassbares Muster. Das Muster besteht üblicherweise aus einer quadratischen Matrix aus schwarzen und weißen Punkten, die codierte Daten binär darstellen.

Der NFC-Chip 42 wird zur Nahfeldkommunikation (Near Field Communication, Abkürzung NFC) genutzt und stellt einen internationalen Übertragungsstandard zum kontaktlosen Austausch von Daten per Funktechnik über kurze Strecken von insbesondere wenigen Zentimetern und mit einer Datenübertragungsrate von maximal 424 kBit/s dar. Die Datenübertragung erfolgt entweder verbindungslos (z.B. mit passiven RFID-Tags nach ISO 1443 oder ISO 15693) oder verbindungsbehaftet (z.B. zwischen gleichwertigen aktiven Transmittern). Die Nahfeldkommunikation basiert im Wesentlichen auf RFID-Technologie (Radio Frequency Identification). RFID ermöglicht einem Lesegerät auf Basis von Funkwellen, einen passiven elektronischen Transponder (Sender/Empfänger) für die Identifizierung, Authentifizierung und/oder ein Tracking auszulesen. Die Nahfeldkommunikation kann mit aktiven Geräten als Zugriffsschlüssel an Terminals auf Inhalt und für Dienste verwendet werden, wie vorliegend für eine Zugriffskontrolle.

Der QR-Code 40 und der NFC-Chip bzw. RFID-Chip 42 repräsentieren vorzugsweise die gleichen Daten. Der maschinenspezifische QR-Code 40 und der maschinenspezifische NFC-Chip 42 sind von außen zugänglich und sichtbar an jedem der Koordinatenmessgeräte 12 angebracht, so dass sie von dem mobilen Endgerät 14 gelesen, insbesondere optisch und/oder elektronisch gescannt, werden können. Zu diesem Zweck ist das mobile Endgerät 14 mit einer entsprechenden Leseeinheit 44 (z.B. einem optischen Scanner oder einen elektronischen aktiven Transponder) ausgestattet. Bei den Daten, die in den QR-Code 40 oder den NFC-Chip 42 eingebettet sind, handelt es sich um Koordinatengerät-spezifische Daten, die nachfolgend als Identifikator bezeichnet werden und die jedes der Koordinatenmessgeräte eindeutig identifizieren.

Ein Identifikator (kurz auch als Kennung oder ID bezeichnet) ist ein mit jedem der Koordinatenmessgeräte 12 verknüpftes Merkmal zur eindeutigen Identifizierung des jeweiligen Koordinatenmessgeräts 12. Beispiele für Indikatoren sind ein Koordinatenmessgerät-Typ, eine Seriennummer des Koordinatenmessgeräts 12, eine SAP-Nummer des Koordinatenmessgeräts 12, ein Herstellungsdatum des Koordinatenmessgeräts 12, ein Herstellungsort des Koordinatenmessgeräts 12, eine Übersicht über die eingesetzten Sensoren und Ähnliches. Es versteht sich, dass der Identifikator auch aus einer Kombination der vorgenannten Merkmale aufgebaut sein kann. Wichtig ist, dass der Identifikator das jeweilige Koordinatenmessgerät 12 eindeutig kennzeichnet.

Es versteht sich, dass der QR-Code 40 und der NFC-Chip 42 nur beispielhafte Implementierungen des Identifikators darstellen. Der Identifikator kann auch in ein anderes Medium eingebettet werden.

Die physische Anbringung der Identifikatoren an den jeweiligen Koordinatenmessgeräten 12 hat den Vorteil, dass ein Nutzer das jeweilige Koordinatenmessgerät 12, welches er ansprechen möchte, gezielt (z.B. durch Scannen mit dem mobilen Endgerät 14) auswählt. Dies ist insbesondere dann von Vorteil, wenn mehrere Koordinatenmessgeräte 12 nahe zueinander, z.B. innerhalb eines einzigen Raums, angeordnet sind. Auf diese Weise ist sichergestellt, dass der Nutzer das richtige Koordinatenmessgerät 12 auswählt.

Natürlich ist es auch möglich, dass der Identifikator zum Beispiel in Form einer Kennung ohne aktives Einlesen an das mobile Endgerät 14 übertragen wird, indem sowohl das Koordinatenmessgerät 12 als auch das mobile Endgerät 14 zu Beginn eines Verbindungsaufbaus in einem Broadcast-Modus betrieben werden.

In einem Broadcast-Modus wird in einem Netzwerk, welches durch die Koordinatenmessgeräte 12 und das oder die mobilen Endgeräte 14 gebildet wird, eine Nachricht (z.B. ein Datenpaket inklusive des Identifikators) von einem Teilnehmer (z.B. vom mobilen Endgerät 14) an alle restlichen Teilnehmer (Koordinatenmessgeräte 12) des Netzwerks übertragen. Ein derartiges Broadcast-Datenpaket erreicht alle Teilnehmer des Netzwerks, ohne dass diese explizit als Empfänger angegeben sind. Jeder Empfänger eines Broadcast-Datenpakets entscheidet selbst, ob er im Falle seiner Zuständigkeit die erhaltene Nachricht entweder verarbeitet oder anderenfalls stillschweigend verwirft. Der Broadcast-Modus wird also verwendet, wenn zum Beispiel eine IP-Adresse eines Empfängers (Koordinatenmessgerät 12) noch unbekannt ist.

Üblicherweise wird aber das mobile Endgerät 14 an den NFC-Chip 42 des ausgewählten Koordinatenmessgeräts 12 gehalten und/oder der QR-Code 40 wird mit der Leseeinheit 44 (z.B. integrierte Kamera) eingelesen. Anhand des eingelesenen Identifikators sucht das mobile Endgerät 14 vorzugsweise im Broadcast-Verfahren das ausgewählte Koordinatenmessgerät 12, um dann, sobald das ausgewählten Koordinatenmessgerät 12 gefunden ist, einen Aufbau der drahtlosen Verbindung 16 zu initiieren.

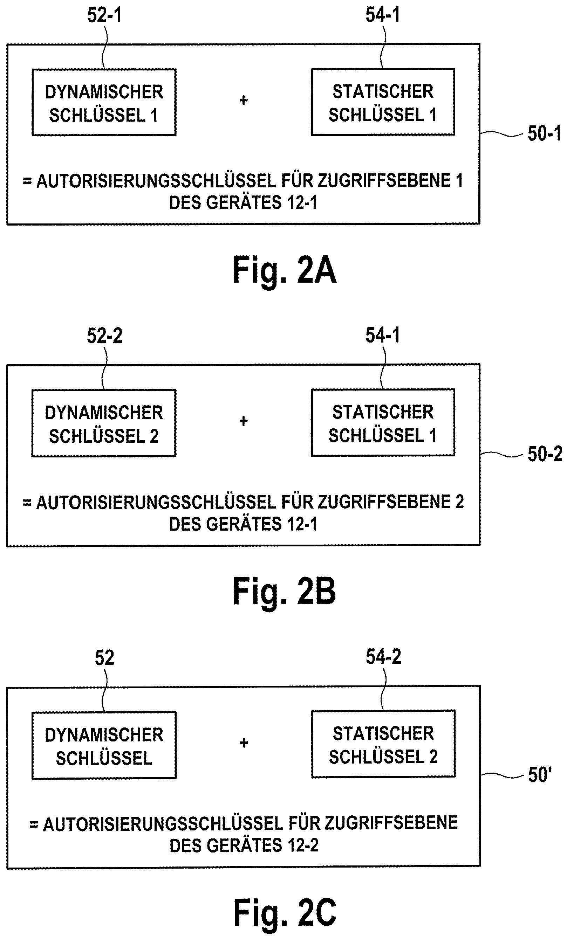

Zur Authentifizierung des Verbindungsaufbaus wird, wie oben erwähnt, mindestens ein Schlüssel eingesetzt. Ein entsprechendes Schlüssel-Konzept wird nachfolgend unter Bezugnahme auf Fig. 2 beschrieben.

Die Figuren 2a bis 2c zeigen verschiedene Autorisierungsschlüssel 50, die zur Authentifizierung des Verbindungsaufbaus eingesetzt werden können. Die Figuren 2a und 2b verdeutlichen zwei Autorisierungsschlüssel 50-1 und 50-2, die sich hinsichtlich eines Zugriffsberechtigungsgrads unterscheiden, der zum Beispiel durch eine Zugriffsebene repräsentiert wird. Die beiden Autorisierungsschlüssel 50-1 und 50-2 gelten beide für das gleiche Gerät, was sich dadurch ausdrückt, dass ein identischer Identifikator verwendet wird. Der Identifikator ist unveränderlich und stellt deshalb einen Koordinatenmessgerät-spezifischen statischen Schlüssel 54 dar. In den Fig. 2a und 2b wird der gleiche statische Schlüssel 54-1 für das gleiche Koordinatenmessgerät 12-1 verwendet. Dieser statische Schlüssel 54-1 wird in Kombination mit einem dynamischen Schlüssel 52 verwendet, um den jeweiligen Autorisierungsschlüssel 50-1 oder 50-2 zu erzeugen. Die Erzeugung des Autorisierungsschlüssels 50 erfolgt unter Verwendung eines Algorithmus bzw. einer Erzeugungsvorschrift 56, die in die oben genannte Software bzw. App integriert ist und die sowohl in der Speichereinheit 26 der Koordinatenmessgeräte 12 als auch in der Speichereinheit 32 des mobilen Endgeräts 14 hinterlegt ist (siehe Fig. 1).

Der dynamische Schlüssel 52-1 der Fig. 2a unterscheidet sich vom dynamischen Schlüssel 52-2 der Fig. 2b hinsichtlich einer Zugriffsebene bzw. hinsichtlich des Zugriffsberechtigungsgrads. Der Endnutzer (z.B. Betreiber des Geräts 12) wird üblicherweise auf andere Bereiche und Funktionalitäten des ausgewählten Koordinatenmessgeräts 12 als zum Beispiel ein Service-Techniker des Herstellers des Geräts 12 zugreifen dürfen. Deshalb kann dem Endnutzer zum Beispiel der dynamische Schlüssel 52-1 der Fig. 2a zugewiesen werden, wohingegen dem Service-Techniker der dynamische Schlüssel 52-2 der Fig. 2b zugewiesen wird. Basierend auf dem statischen Schlüssel 54 sowie dem dynamischen Schlüssel 52 erzeugt die Erzeugungsvorschrift 56 den Autorisierungsschlüssel 50.

Der Autorisierungsschlüssel 50' der Fig. 2c hingegen ist für ein anderes Koordinatenmessgerät 12 (hier das Koordinatenmessgerät 12-2) gedacht, was sich darin äußert, dass ein statischer Schlüssel 54-2 eingesetzt wird, der sich vom statischen Schlüssel 54-1 der Fig. 2a und 2b unterscheidet. Der Autorisierungsschlüssel 50' der Fig. 2c basiert ferner auf einem generischen dynamischen Schlüssel 52, der nicht hinsichtlich eines Zugriffsberechtigungsgrads unterscheidet. Dies bedeutet, dass die Autorisierungsschlüssel 50 auch ohne Berücksichtigung eines Zugriffsberechtigungsgrads erzeugbar sind. Die Autorisierungsschlüssel 50 werden aber sowohl auf der Seite des ausgewählten Koordinatenmessgeräts 12 als auch auf der Seite des mobilen Endgeräts 14 separat voneinander erzeugt und sind dennoch identisch, weil sie auf den gleichen Ausgangsdaten (Schlüssel 52 und Schlüssel 54) und der gleichen Erzeugungsvorschrift 56 basieren.

Es versteht sich, dass die drahtlose Verbindung 16 selbst verschlüsselt werden kann, zum Beispiel über WPA2.

Die Daten bzw. der Code, der durch den Identifikator bzw. den statischen Schlüssel 54 repräsentiert wird, kann also ein Teilschlüssel für den Autorisierungsschlüssel 50 sein. Der statische Schlüssel 54 kann ferner zur Identifizierung der drahtlosen Verbindung (z.B. einer Funkstrecke) 16 zwischen dem mobilen Endgerät 14 und dem ausgewählten Koordinatenmessgerät 12 verwendet werden. Der Name dieser Funkstrecke kann zum Beispiel "Koordinatenmessgerät-Name + Seriennummer" (z.B. Contura 502925) lauten.

Der dynamische Schlüssel 54 wird durch die Auswerte- und Steuerungseinheit 22 des ausgewählten Koordinatenmessgeräts 12 definiert und anschließend, vorzugsweise physisch, durch den Nutzer an das mobile Endgeräte 14 transferiert, um dort wiederum zur (erneuten) Erzeugung des Autorisierungsschlüssels 50 eingesetzt zu werden. Der dynamische Schlüssel 52 kann zum Beispiel ein alphanumerisches Passwort oder eine Signaturdatei sein.

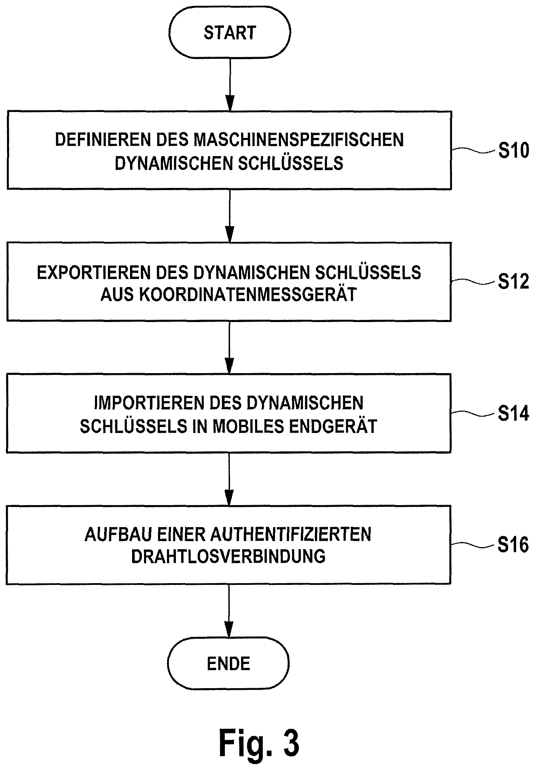

Unter Bezugnahme auf Fig. 3 wird nachfolgend ein Verfahren zum Erzeugen des Autorisierungsschlüssels 50 beschrieben.

In einem ersten Schritt S10 wird der dynamische Schlüssel 52 (z.B. alphanumerisches Passwort oder Signaturdatei) auf der Seite des ausgewählten Koordinatenmessgeräts 12 definiert. Der Nutzer, der mit seinem mobilen Endgerät 14 auf das ausgewählte Koordinatenmessgerät 12 (drahtlos) zugreifen möchte, hat auch Zugriff auf die Auswerte- und Steuerungseinheit 22 des ausgewählten Koordinatenmessgeräts 12. Der Koordinatenmessgerät-spezifische dynamische Schlüssel 52 wird entweder von der Auswerte- und Steuerungseinheit 22 des ausgewählten Koordinatenmessgeräts 12 festgelegt oder kann, sofern ein Autorisierungsgrad irrelevant ist, vom Nutzer selbst durch eine entsprechende Dateneingabe in der Auswerte- und Steuerungseinheit 22 definiert werden. Wenn der dynamische Code 54 durch die Auswerte- und Steuerungseinheit 22 festgelegt wird, kann dies durch eine einfache Auswahl eines Schlüssels (z.B. Pin oder alphanumerisches Passwort) oder durch eine Berechnung (z.B. Signaturdatei) erfolgen. Die Berechnung kann wiederum auf Basis eines Pins oder alphanumerischen Passworts unter Verwendung der Erzeugungsvorschrift 56 erfolgen. Sobald der dynamische Schlüssel 52 vorliegt, wird er in der Speichereinheit 26 des ausgewählten Koordinatenmessgeräts 12 hinterlegt. Der Nutzer kann diesen dynamischen Schlüssel 52 zum Beispiel über die Schnittstelle 38 exportieren. Die Schnittstelle 38 des Koordinatenmessgeräts 12 kann beispielsweise als USB-Port implementiert sein. Wenn der dynamische Schlüssel 52 in Form eines einfachen Pin oder alphanumerischen Passworts vorliegt, kann dieser dynamische Schlüssel 52 auf einer hier nicht näher gezeigten und bezeichneten Anzeigevorrichtung der Auswerte- und Steuerungseinheit 22 angezeigt werden, so dass der Nutzer diesen dynamischen Schlüssel 52 notieren kann.

Das Exportieren des dynamischen Schlüssels 52 erfolgt in einem Schritt S12. Dabei bewegt der Nutzer den dynamischen Schlüssel 52 vom Gerät 12 zum mobilen Endgerät 14.

Anschließend wird dieser dynamische Schlüssel 52 durch den Nutzer in das mobile Endgerät 14 importiert, indem der Nutzer zum Beispiel den USB-Stick in die Schnittstelle 38 des mobilen Endgeräts 14 einsteckt und der dynamische Schlüssel 52 dann in die Speichereinheit 32 des mobilen Endgeräts 14 transferiert wird.

Sobald der dynamische Schlüssel 52 im mobilen Endgerät 14 vorliegt, kann in einem Schritt S16 die drahtlose Verbindung 16 authentifiziert aufgebaut werden, wobei vorzugsweise sowohl der Identifikator bzw. der statische Schlüssel 54 des ausgewählten Koordinatenmessgeräts 12 als auch der dynamische Schlüssel 54 zur Authentifizierung verwendet werden. Das mobile Endgerät 14 berechnet auf Basis des dynamischen Schlüssels 52, und gegebenenfalls auch unter Verwendung des statischen Schlüssels 54, der zum Beispiel zuvor eingescannt wurde, den Koordinatenmessgerät-spezifischen Autorisierungsschlüssel 15 gemäß der Erzeugungsvorschrift 56. Das gleiche passiert auf der Seite des ausgewählten Koordinatenmessgeräts 12.

Es versteht sich, dass der Autorisierungsschlüssel 50 dem dynamischen Schlüssel 52 entsprechen kann, wenn zum Beispiel nicht hinsichtlich unterschiedlicher Zugriffsberechtigungsgrade unterschieden wird und wenn der Autorisierungsschlüssel 50 nicht berechnet wird, sondern ausschließlich festgelegt wird, wie zum Beispiel durch einen Pin. Dieser Verbindungschlüssel 50 muss auch nicht den Identifikator bzw. statischen Schlüssel 54 beinhalten, da der statische Schlüssel 54 allein zur Identifizierung der Drahtlosverbindung 16 zwischen dem mobilen Endgerät 14 und dem ausgewählten Koordinatenmessgerät 12 dienen kann. Der Autorisierungsschlüssel 50 ist in diesem Fall also allein durch den dynamischen Schlüssel 52 bestimmt.

Generell gilt, dass der dynamische Schlüssel 52 nur auf der Seite des Koordinatenmessgeräts 12 geändert werden kann. Wird der dynamische Schlüssel 52 geändert, so ändert sich auch der Autorisierungsschlüssel 50 des jeweiligen Koordinatenmessgeräts 12 für die jeweilige Zugriffsebene, soweit Zugriffsebenen berücksichtigt werden.

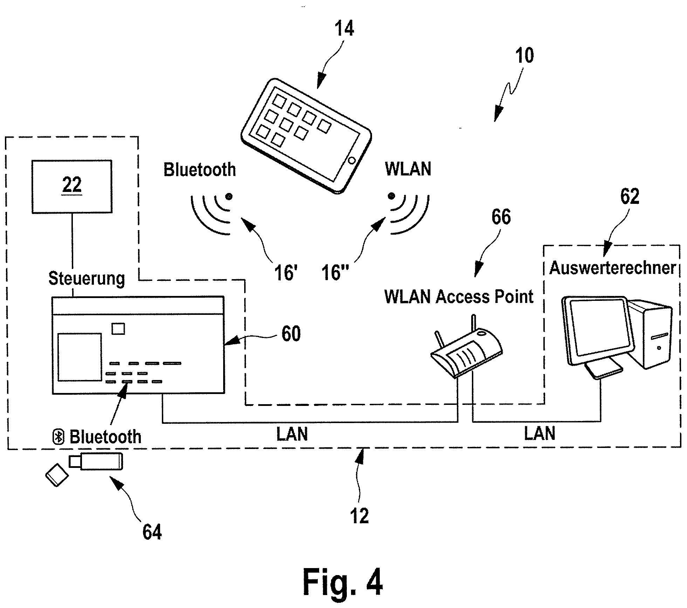

Fig. 4 zeigt ein Blockdiagramm einer speziellen Ausführungsform des Systems 10, wobei in diesem Fall zum Beispiel nur ein einziges Koordinatenmessgerät 12 eingesetzt wird. Komponenten, die zu diesem Koordinatenmessgerät 12 gehören, sind mit einer Hilfslinie umrandet, wobei nicht alle Komponenten des Koordinatenmessgeräts 12 gezeigt sind, die in der Fig. 1 gezeigt sind. Die Auswerte- und Steuerungseinheit 22 der Fig. 1 ist in der Fig. 4 zweigeteilt. Die Auswerte- und Steuerungseinheit 22 umfasst in der Fig. 4 eine Steuerungseinrichtung 60 (z.B. eine SPS) und eine Auswertungseinrichtung 62 (z.B. einen Auswerterechner bzw. Auswerte-PC). Die Steuerungseinrichtung 60 ist mit dem Messsystem 22 verbunden und üblicherweise entfernt zu der physisch getrennt vorgesehenen Auswertungseinrichtung 62 angeordnet. Die Steuerungseinrichtung 60 ist über eine Leitung (z.B. über ein lokales Netzwerk, LAN) zwecks Datenaustauschs mit der Auswertungseinrichtung 62 verbunden. Bei dem Koordinatenmessgerät 12 der Fig. 4 kann es sich um ein konventionelles Koordinatenmessgerät 12 handeln, das nachgerüstet wurde, um die vorliegende Erfindung zu implementieren. Zu diesem Zweck kann zum Beispiel ein Bluetooth-Adapter 64 an die Steuerungseinrichtung 60 gekoppelt werden. Es versteht sich, dass andere Sender/Empfänger-Einheiten 28 an die Steuerungseinrichtung 60 gekoppelt werden können. Dies hängt allein von der technischen Ausgestaltung der Steuerungseinrichtung 60 ab. Das mobile Endgerät 14 ist Bluetooth-fähig, um eine Drahtlosverbindung 16' (Bluetooth-Verbindung) zwischen der Steuerungseinrichtung 60 und dem mobilen Endgerät 14 aufzubauen.

An die Auswertungseinrichtung 62 ist ein Router 66 gekoppelt, der als WLAN-Access-Point dient. Das mobile Endgerät 14 ist auch WLAN-fähig, um eine Drahtlosverbindung 16" (WLAN-Verbindung) zwischen dem mobilen Endgerät 14 und der Auswertungseinrichtung 62 aufzubauen.

Es versteht sich, dass in Abhängigkeit von dem gewünschten bzw. gewählten Typ der Drahtlosverbindung 16 kompatible Sender/Empfänger-Einheiten 28 und 34 (vgl. Fig. 1) eingesetzt werden. Im Beispiel der Fig. 4 sind zwei Sender/Empfänger-Einheiten 28 für das Koordinatenmessgerät 12 in Form des Bluetooth-Adapters 64 und des (WLAN-)Routers 66 vorgesehen. Die Sender/Empfänger-Einheit 34 des mobilen Endgeräts 14 ist entsprechend zweiteilig ausgebildet.

Um die Erfindung zu implementieren, wird das (konventionelle) Koordinatenmessgerät 12 software-technisch in Form eines Upgrades um solche Module erweitert, die für den Aufbau der authentifizierten drahtlosen Verbindung 16 sowie für die Definition und/oder Erzeugung der Schlüssel 50, 52 und/oder 54 erforderlich sind. Das mobile Endgerät 14 wird mit einer proprietären Software des Herstellers des (konventionellen) Koordinatenmessgeräts 12 betrieben, die entsprechende Module umfasst. Somit ist es möglich, selbst ältere Koordinatenmessgeräte mit einem modernen mobilen Endgerät 14 zu bedienen. Erfolgt die Bedienung durch den Endnutzer (Käufer des Koordinatenmessgeräts 12), kann durch eine Regelung des Zugriffsberechtigungsgrads verhindert werden, dass das Koordinatenmessgerät 12 durch eine Fehlbedienung beschädigt wird. Gleichzeitig kann einem Service-Techniker jedoch die Möglichkeit eröffnet werden, auf grundlegende Prozessparameter des Koordinatenmessgeräts 12 zuzugreifen.

Die oben beschriebene App für das mobile Endgerät 14 kann zur Informations- und Statusanzeige des Koordinatenmessgeräts 12 eingesetzt werden. Die App ist in einem freien App-Store (z.B. für Android, Apple oder Microsoft) verfügbar und kann auf jedem beliebigen mobilen Endgerät 14 mit WLAN-, Bluetooth-, Kamera- und/oder NFC-Funktionalität installiert werden. Für gewisse Funktionen kann eine Internetanbindung des mobilen Endgeräts 14 erforderlich sein, um zum Beispiel einen Datenabgleich mit einer Datenbank des Herstellers des Koordinatenmessgeräts 12 durchzuführen.

Selbst wenn das Koordinatenmessgerät 12 noch nicht zur Implementierung der Erfindung eingerichtet ist, kann der Nutzer zum Beispiel durch Einlesen des QR-Codes 40 (vgl. Fig. 1) auf dem Maschinenschild des Koordinatenmessgeräts online die Upgrade-Tauglichkeit des entsprechenden Koordinatenmessgeräts überprüfen lassen, um gegebenenfalls direkt einen, vorzugsweise kostenpflichtigen, Service-Upgrade-Auftrag zu initiieren. Alternativ kann die Upgrade-Tauglichkeit des Geräts 12 durch ein Auswahlmenü auf dem mobilen Endgerät 14 ermittelt bzw. abgefragt werden.

Die App auf dem mobilen Endgerät 14 zeigt dem Nutzer vorzugsweise sinnvolle Zusatzinformationen an, die nicht durch die Auswertungseinrichtung 62 abgebildet werden oder abgebildet werden können. So kann zum Beispiel angezeigt werden: eine Statusanzeige des Geräts 12 (Referenzpunkt, angetastet, Kollision, etc.); eine aktuelle Position eines Messkopfs sowie letzte Messwertpunkte; eine verbleibende Zeit eines aktuellen Messablaufs; eine Alarmbenachrichtigung im Falle eines Messablaufendes oder -abbruchs; Anpresskräfte von Messsensoren, Messdauer, Warmlaufzeit, Datum und Grund bisheriger Serviceeinsätze; Anzeige eines voraussichtlichen nächsten Serviceeinsatzes; und Ähnliches.

Auch die Anzeige der folgenden Zusatzfunktionen ist möglich: Aufzeichnung von Fahr- und Messmakros sowie Start derselben; Erstellung einer Diagnoseübersicht inklusive Online-Übermittlung; Initiierung eines Serviceauftrags inklusive Übermittlung von Betriebsparametern und Ausstattungsmerkmalen; Bedienungsvideos; Anmeldeformulare für Bedienungsschulungen; Statistik- und Fehlerlogmeldungen; Informationen zu möglichem Zubehör wie zum Beispiel Sensoren, Messköpfe, Rundtische, Softwarezusatzpakete, Tastermagazine und Ähnliches; Freischaltung von Testversionen von Softwarezusatzpaketen; Bereitstellung von Zusatzhardware; Feedback-Formulare; und Ähnliches.

Der Nutzer erhält also sinnvolle Zusatzinformationen für sein Koordinatenmessgerät 12, die ihm die Bedienung erheblich erleichtern. Indirekt unterstützt der Nutzer durch Senden von Statistik- und Fehlerdaten oder durch Senden von Verbesserungsvorschlägen eine (kontinuierliche) Verbesserung der Koordinatenmessgeräte 12. Neue Vertriebswege können erschlossen werden, da der Kontakt zwischen dem Käufer des Koordinatenmessgeräts und dem Hersteller desselben nicht abbricht. Werbeinformationen zu Zusatzkomponenten können übermittelt werden.

Es versteht sich, dass die in den Figuren 1 und 4 gezeigten Systeme 10 nur beispielhafter Natur sind. Die Komponenten der in den Figuren 1 und 4 gezeigten Geräte 12 können beliebig ausgetauscht und/oder erweitert werden. Der Einsatz von Bluetooth und WLAN (IP-Adressen-basierte Kommunikation) ist lediglich exemplarischer Natur. Es versteht sich, dass auch diese gegen andere Drahtloskommunikations-Protokolle ausgetauscht werden können. Die Verbindung 16 zwischen dem Koordinatenmessgerät 12 und dem mobilen Endgerät 14 kann auch über eine mobile Datenverbindung (GSM, EDGE, UMTS, HSPA, LTE, etc.) erfolgen. In diesem Fall verfügen die Geräte 12 und 14 über entsprechende Sender/Empfänger-Einheiten, Protokolle, SIM-Karten und Ähnliches. Das mobile Gerät 14 kann dann z.B. durch ein 3G-taugliches Tablet inkl. SIM-Karte implementiert sein. Das Gerät 12 kann mit einem "SurfStick" oder einem über WLAN angeschlossenen Router inkl. SIM-Karte ausgerüstet sein.

### BEZUGSZEICHENLISTE

- 10: System
- 12: KMG
- 14: mobiles Endgerät
- 16: Drahtlosverbindung
- 18: Netzwerk/WLAN
- 20: Messsystem
- 22: Auswerte- und Steuerungseinheit
- 24: Datenverarbeitungseinheit
- 26: 1. Speichereinheit
- 28: 1. Sender/Empfänger-Einheit
- 30: 2. Datenverarbeitungseinheit
- 32: 2. Speichereinheit
- 34: 2. Sender (Empfangs-Einheit)
- 36: Verbindung(en)
- 38: Eingang/Ausgang-Schnittstelle
- 40: QR-Code
- 42: NFC-Chip
- 44: Leseeinheit
- 50: Verbindungsschlüssel
- 52: dynamischer Schlüssel
- 54: Statischer Schlüssel
- 56: Erzeugungsvorschrift/Berechnungsalgorithmus
- 60: Steuerungsvorrichtung
- 62: Auswertungsvorrichtung
- 64: Bluetooth-Adapter
- 66: Router

## Patentansprüche

1. Koordinatenmess-System (10) zur sicheren und intelligenten Kopplung und Anbindung eines mobilen Endgeräts (14) an ein stationär angeordnetes Koordinatenmessgerät (12) aufweisend:
ein stationär angeordnetes Koordinatenmessgerät (12), das aufweist: ein Messsystem (20); eine Auswerte- und Steuerungseinheit (22) mit einer ersten Datenverarbeitungseinheit (24); eine erste Speichereinheit (26) zur Speicherung von Daten, Parametern und Programmen; und eine erste Sender/Empfänger-Einheit (28) für eine drahtlose Kommunikation; und
ein mobiles Endgerät (14), das physisch getrennt vom sowie beweglich zum Koordinatenmessgerät (12) angeordnet ist und das zum Bedienen des Koordinatenmessgeräts (12) und/oder zum Anzeigen von Daten des Koordinatenmessgeräts (12) durch einen Nutzer eingerichtet ist, wobei das mobile Endgerät (14) aufweist: eine zweite Datenverarbeitungseinheit (30); eine zweite Speichereinheit (32) zur Speicherung von Daten und Programmen; und eine zweite Sender/Empfänger-Einheit (34) für die drahtlose Kommunikation;
wobei das Koordinatenmessgerät (12) und das mobile Endgerät (14) eingerichtet sind, eine authentifizierte drahtlose Verbindung (16) zum Austauschen von Daten zwischen dem Koordinatenmessgerät (12) und dem mobilen Endgerät (14) aufzubauen;
wobei dem Koordinatenmessgerät (12) ein Identifikator, der das Koordinatenmessgerät (12) eindeutig identifiziert, sowie ein dynamischer erster Schlüssel (52) zugeordnet sind, wobei der dynamische erste Schlüssel (52) eine Zugriffsberechtigung repräsentiert, wobei unterschiedliche Zugriffsberechtigungsgrade in unterschiedlichen ersten Schlüsseln (52) resultieren; wobei der dynamische erste Schlüssel (52) Koordinatenmessgerät-spezifisch ist und wobei der Identifikator ein Koordinatenmessgerät-spezifischer statischer zweiter Schlüssel (54) ist;
wobei das mobile Endgerät (14) ferner eingerichtet ist, den dynamischen ersten Schlüssel (52) vom Nutzer abzufragen, wobei der dynamische erste Schlüssel (52) zur Authentifizierung beim Aufbau der drahtlosen Verbindung (16) verwendet wird;
wobei die Auswerte- und Steuerungseinheit (22) eingerichtet ist, gemäß einer Erzeugungsvorschrift (56), die in der ersten Speichereinheit (26) hinterlegt ist, basierend auf dem dynamischen ersten Schlüssel (52) und dem statischen zweiten Schlüssel (54) einen Koordinatenmessgerät-spezifischen Autorisierungsschlüssel (50) zu erzeugen und den erzeugten Autorisierungsschlüssel (50) in der ersten Speichereinheit zu hinterlegen, wobei die drahtlose Verbindung (16) anhand des so erzeugten Autorisierungsschlüssels (50) authentifiziert wird; und
wobei das mobile Endgerät (14) eingerichtet ist, den statischen zweiten Schlüssel (54) abzufragen und dann in Kenntnis des dynamischen ersten Schlüssels (52) und des statischen zweiten Schlüssels (54) gemäß der Erzeugungsvorschrift (56), die auch in der zweiten Speichereinheit (32) hinterlegt ist, den gleichen Autorisierungsschlüssel (50) zu erzeugen und in der zweiten Speichereinheit (32) für den authentifizierten Aufbau der drahtlosen Verbindung (16) zu hinterlegen.

2. System nach Anspruch 1, wobei der statische zweite Schlüssel (54) einen Gerätetyp des Koordinatenmessgeräts (12), eine Seriennummer des Koordinatenmessgeräts (12), ein Herstellungsdatum des Koordinatenmessgeräts, einen Herstellungsort des Koordinatenmessgeräts (12) und/oder eine SAP-Nummer des Koordinatenmessgeräts (12) repräsentiert.

3. System nach einem der Ansprüche 1 bis 2, wobei der statische zweite Schlüssel (54) die drahtlose Verbindung (16) eindeutig identifiziert.

4. System nach einem der Ansprüche 1 bis 3, wobei der dynamische erste Schlüssel (54) ein alphanumerisches Passwort und/oder eine Signaturdatei ist.

5. System nach einem der Ansprüche 1 bis 4, wobei der statische zweite Schlüssel (54) in einen optisch lesbaren QR-Code (40) und/oder elektronisch lesbar in einen NFC-Chip (42) oder RFID-Chip eingebettet ist, wobei der QR-Code (40) und/oder der NFC-Chip (42) an dem Koordinatenmessgerät (12) angebracht ist bzw. sind und wobei das mobile Endgerät (14) eine Leseeinheit (44) aufweist, die zum Lesen des QR-Codes (40) und/oder des NFC-Chips (42) oder RFID-Chips eingerichtet ist.

6. System nach einem der Ansprüche 1 bis 5, wobei das mobile Endgerät (14) einen Schlüssel-Port aufweist, über den der vom Koordinatenmessgerät (12) ausgegebene, dynamische erste Schlüssel (52) importierbar ist, und wobei das Koordinatenmessgerät (12) einen weiteren Schlüssel-Port aufweist, über den der dynamische erste Schlüssel (52) exportierbar ist.

7. System nach einem der Ansprüche 1 bis 6, wobei die Auswerte- und Steuerungseinheit (22) eine Auswertungseinrichtung (62) und eine Steuerungseinrichtung (60) ausweist, wobei die Auswertungseinrichtung (62) vorzugsweise entfernt zum Messsystem (20) und zur Steuerungseinrichtung (60) angeordnet ist.

8. Koordinatenmessgerät, das aufweist:
ein Messsystem (20);
eine Auswerte- und Steuerungseinheit (22) mit einer ersten Datenverarbeitungseinheit (24);
eine erste Speichereinheit (26) zur Speicherung von Daten, Parametern und Programmen; und
eine erste Sender/Empfänger-Einheit (28) für eine drahtlose Kommunikation;
wobei das Koordinatenmessgerät (12) eingerichtet ist, eine authentifizierte drahtlose Verbindung (16) zum Austauschen von Daten zwischen dem Koordinatenmessgerät (12) und einem mobilen Endgerät (14) aufzubauen;
wobei dem Koordinatenmessgerät (12) ein Identifikator, der das Koordinatenmessgerät (12) eindeutig identifiziert, sowie ein dynamischer erster Schlüssel (52) zugeordnet sind, wobei der dynamische erste Schlüssel (52) eine Zugriffsberechtigung repräsentiert, wobei unterschiedliche Zugriffsberechtigungsgrade in unterschiedlichen ersten Schlüsseln (52) resultieren; wobei der dynamische erste Schlüssel (52) Koordinatenmessgerät-spezifisch ist und wobei der Identifikator ein Koordinatenmessgerät-spezifischer statischer zweiter Schlüssel (54) ist;
wobei die Auswerte- und Steuerungseinheit (22) eingerichtet ist, gemäß einer Erzeugungsvorschrift (56), die in der ersten Speichereinheit (26) hinterlegt ist, basierend auf dem dynamischen ersten Schlüssel (52) und dem statischen zweiten Schlüssel (54) einen Koordinatenmessgerät-spezifischen Autorisierungsschlüssel (50) zu erzeugen und den erzeugten Autorisierungsschlüssel (50) in der ersten Speichereinheit zu hinterlegen, wobei die drahtlose Verbindung (16) anhand des so erzeugten Autorisierungsschlüssels (50) authentifiziert wird.

9. Mobiles Endgerät (14), das physisch getrennt von und beweglich zu einem Koordinatenmessgerät (12) angeordnet ist und das zum Bedienen des Koordinatenmessgeräts (12) und/oder zum Anzeigen von Daten des Koordinatenmessgeräts (12) durch einen Nutzer eingerichtet ist, wobei das mobile Endgerät (14) aufweist:
eine Datenverarbeitungseinheit (30);
eine Speichereinheit (32) zur Speicherung von Daten und Programmen; und
eine Sender/Empfänger-Einheit (34) für die drahtlose Kommunikation;
wobei das mobile Endgerät (14) eingerichtet ist, eine authentifizierte drahtlose Verbindung (16) zum Austauschen von Daten zwischen dem Koordinatenmessgerät (12) und dem mobilen Endgerät (14) aufzubauen;
wobei das mobile Endgerät (14) ferner eingerichtet ist, einen dynamischen ersten Schlüssel (52) vom Nutzer abzufragen, wobei der dynamische erste Schlüssel (52) zur Authentifizierung beim Aufbau der drahtlosen Verbindung (16) verwendet wird, wobei der dynamische erste Schlüssel (52) dem Koordinatenmessgerät (12) zugeordnet ist, wobei der dynamische erste Schlüssel (52) eine Zugriffsberechtigung repräsentiert, wobei unterschiedliche Zugriffsberechtigungsgrade in unterschiedlichen ersten Schlüsseln (52) resultieren, wobei der dynamische erste Schlüssel (52) Koordinatenmessgerät-spezifisch ist und wobei ein Identifikator, der dem Koordinatenmessgerät zugeordnet ist, ein Koordinatenmessgerät-spezifischer statischer zweiter Schlüssel (54) ist;
wobei das mobile Endgerät (14) ferner eingerichtet ist, den statischen zweiten Schlüssel (54) abzufragen und dann in Kenntnis des dynamischen ersten Schlüssels (52) und des statischen zweiten Schlüssels (54) gemäß einer Erzeugungsvorschrift (56), die in der Speichereinheit (32) hinterlegt ist, einen Autorisierungsschlüssel (50) zu erzeugen und in der Speichereinheit (32) für den authentifizierten Aufbau der drahtlosen Verbindung (16) zu hinterlegen.

10. Verfahren zur sicheren und intelligenten Kopplung sowie Anbindung eines mobilen Endgeräts (14) an ein stationär angeordnetes Koordinatenmessgerät (12), mit den Schritten:
Definieren (S10) eines dynamischen ersten Schlüssels (52), wobei der dynamische erste Schlüssel (52) eine Zugriffsberechtigung repräsentiert, wobei unterschiedliche Zugriffsberechtigungsgrade in unterschiedlichen ersten Schlüsseln (52) resultieren, und Hinterlegen des dynamischen ersten Schlüssels (52) in einer ersten Speichereinheit (26) des Koordinatenmessgeräts (12);
Exportieren (S12) des dynamischen ersten Schlüssels (52) aus dem Koordinatenmessgerät (12) an den Nutzer;
Importieren (S14) des dynamischen ersten Schlüssels (52) in das mobile Endgerät (14) durch den Nutzer;
Aufbauen (S16) einer drahtlosen Verbindung (16) zwischen dem Koordinatenmessgerät (12) und dem mobilen Endgerät (14), wobei der Aufbau der drahtlosen Verbindung (16) authentifiziert unter Verwendung eines Identifikators, der das Koordinatenmessgerät (12) eindeutig identifiziert, sowie des dynamischen ersten Schlüssels (52) zur Erzeugung eines Koordinatenmessgerät-spezifischen Autorisierungsschlüssels (50) gemäß einer Erzeugungsvorschrift (56), die in dem Koordinatenmessgerät (12) und in dem mobilen Endgerät (14) hinterlegt ist, durch das Koordinatenmessgeräts (12) sowie durch das mobile Endgerät (14) erfolgt, wobei der dynamische erste Schlüssel (52) Koordinatenmessgerät-spezifisch ist und wobei der Identifikator ein Koordinatenmessgerät-spezifischer statischer zweiter Schlüssel (54) ist.

11. Verfahren nach Anspruch 10, wobei das Verfahren ferner aufweist:
Importieren des statischen zweiten Schlüssels (54) in das mobile Endgerät (14) durch den Nutzer;
Erzeugen des Koordinatenmessgerät-spezifischen Autorisierungsschlüssels basierend auf dem dynamischen ersten Schlüssel (52) und dem statischen zweiten Schlüssel gemäß der Erzeugungsvorschrift (56) durch das Koordinatenmessgerät (12) und das mobile Endgerät (14),; und
Hinterlegen des Autorisierungsschlüssels (50) in dem Koordinatenmessgerät (12) und in dem mobilen Endgerät (14);
Authentifizieren des Aufbaus der drahtlosen Verbindung (16) durch Verwendung des Autorisierungsschlüssels (50).

12. Verfahren nach einem der Ansprüche 10 oder 11, wobei die Schritte des Importierens der Schlüssel (52, 54) aufweisen:
Auslesen des dynamischen ersten Schlüssels (52) aus dem Koordinatenmessgerät (12) auf ein Datenspeichermedium durch den Nutzer;
Einlesen des ausgelesenen dynamischen ersten Schlüssels (52) vom Datenspeichermedium in das mobile Endgerät (14); und
Einlesen des statischen zweiten Schlüssels (54) durch Scannen des zweiten statischen Schlüssels (54), der an dem Koordinatenmessgerät (12) frei zugänglich angebracht ist, mittels des mobilen Endgeräts (14).

## Claims

1. Coordinate measuring system (10) for secure and intelligent coupling and binding of a mobile terminal (14) to a coordinate measuring machine (12) arranged in stationary fashion, comprising:
a coordinate measuring machine (12) arranged in stationary fashion, comprising: a measuring system (20); an evaluation and control unit (22) with a first data processing unit (24); a first memory unit (26) for storing data, parameters and programs; and a first transceiver unit (28) for wireless communication; and
a mobile terminal (14) arranged so as to be physically separated from and movable with respect to the coordinate measuring machine (12) and configured to operate the coordinate measuring machine (12) and/or display data of the coordinate measuring machine (12) by way of a user, wherein the mobile terminal (14) comprises: a second data processing unit (30); a second memory unit (32) for storing data and programs; and a second transceiver unit (34) for wireless communication;
wherein the coordinate measuring machine (12) and the mobile terminal (14) are configured to establish an authenticated wireless connection (16) for exchanging data between the coordinate measuring machine (12) and the mobile terminal (14);
wherein an identifier that uniquely identifies the coordinate measuring machine (12) and a dynamic first key (52) are assigned to the coordinate measuring machine (12), wherein the dynamic first key (52) represents an access authorization, with different levels of access authorization resulting in different first keys (52); wherein the dynamic first key (52) is coordinate measuring machine-specific and wherein the identifier is a coordinate measuring machine-specific static second key (54);
wherein the mobile terminal (14) is further configured to query the dynamic first key (52) from the user, the dynamic first key (52) being used for authentication purposes during the establishment of the wireless connection (16);
wherein the evaluation and control unit (22) is configured to generate a coordinate measuring machine-specific authorization key (50) in accordance with a generation prescription (56) saved in the first memory unit (26) and on the basis of the dynamic first key (52) and the static second key (54), and to save the generated authorization key (50) in the first memory unit, the wireless connection (16) being authenticated on the basis of the authorization key (50) generated thus; and
wherein the mobile terminal (14) is configured to query the static second key (54) and then generate the same authorization key (50) in accordance with the generation prescription (56), which is also saved in the second memory unit (32), and with knowledge of the dynamic first key (52) and the static second key (54), and save said same authorization key in the second memory unit (32) for the authenticated establishment of the wireless connection (16).

2. System according to Claim 1, wherein the static second key (54) represents a machine type of the coordinate measuring machine (12), a serial number of the coordinate measuring machine (12), a date of manufacture of the coordinate measuring machine, a place of manufacture of the coordinate measuring machine (12) and/or an SAP number of the coordinate measuring machine (12).

3. System according to either of Claims 1 and 2, wherein the static second key (54) uniquely identifies the wireless connection (16).

4. System according to any one of Claims 1 to 3, wherein the dynamic first key (54) is an alphanumeric password and/or signature file.

5. System according to any one of Claims 1 to 4, wherein the static second key (54) is embedded in an optically readable QR code (40) and/or in electronically readable fashion in an NFC chip (42) or RFID chip, the QR code (40) and/or the NFC chip (42) being mounted on the coordinate measuring machine (12) and the mobile terminal (14) comprising a reader unit (44) configured to read the QR code (40) and/or the NFC chip (42) or RFID chip.

6. System according to any one of Claims 1 to 5, wherein the mobile terminal (14) has a key port, by way of which the dynamic first key (52) output by the coordinate measuring machine (12) is importable, and wherein the coordinate measuring machine (12) has a further key port, by way of which the dynamic first key (52) is exportable.

7. System according to any one of Claims 1 to 6, wherein the evaluation and control unit (22) reveals an evaluation device (62) and a control device (60), wherein the evaluation device (62) is preferably arranged at a distance from the measuring system (20) and from the control device (60).

8. Coordinate measuring machine, comprising:
a measuring system (20);
an evaluation and control unit (22) with a first data processing unit (24);
a first memory unit (26) for storing data, parameters and programs; and
a first transceiver unit (28) for wireless communication;
wherein the coordinate measuring machine (12) is configured to establish an authenticated wireless connection (16) for exchanging data between the coordinate measuring machine (12) and a mobile terminal (14),
wherein an identifier that uniquely identifies the coordinate measuring machine (12) and a dynamic first key (52) are assigned to the coordinate measuring machine (12), wherein the dynamic first key (52) represents an access authorization, with different levels of access authorization resulting in different first keys (52); wherein the dynamic first key (52) is coordinate measuring machine-specific and wherein the identifier is a coordinate measuring machine-specific static second key (54);
wherein the evaluation and control unit (22) is configured to generate a coordinate measuring machine-specific authorization key (50) in accordance with a generation prescription (56) saved in the first memory unit (26) and on the basis of the dynamic first key (52) and the static second key (54), and to save the generated authorization key (50) in the first memory unit, the wireless connection (16) being authenticated on the basis of the authorization key (50) generated thus.

9. Mobile terminal (14) arranged so as to be physically separated from and movable with respect to a coordinate measuring machine (12) and configured to operate the coordinate measuring machine (12) and/or display data of the coordinate measuring machine (12) by way of a user, wherein the mobile terminal (14) comprises:
a data processing unit (30);
a memory unit (32) for storing data and programs; and
a transceiver unit (34) for wireless communication;
wherein the mobile terminal (14) is configured to establish an authenticated wireless connection (16) for exchanging data between the coordinate measuring machine (12) and the mobile terminal (14);
wherein the mobile terminal (14) is further configured to query a dynamic first key (52) from the user, the dynamic first key (52) being used for authentication purposes when establishing the wireless connection (16), wherein the dynamic first key (52) is assigned to the coordinate measuring machine (12), wherein the dynamic first key (52) represents an access authorization, with different levels of access authorization resulting in different first keys (52), wherein the dynamic first key (52) is coordinate measuring machine-specific and wherein an identifier, which is assigned to the coordinate measuring machine, is a coordinate measuring machine-specific static second key (54);
wherein the mobile terminal (14) is further configured to query the static second key (54) and then generate an authorization key (50) in accordance with a generation prescription (56), which is saved in the memory unit (32), and with knowledge of the dynamic first key (52) and the static second key (54), and save said authorization key in the memory unit (32) for the authenticated establishment of the wireless connection (16) .

10. Method for secure and intelligent coupling and binding of a mobile terminal (14) to a coordinate measuring machine (12) arranged in stationary fashion, including the steps of:
defining (S10) a dynamic first key (52), wherein the dynamic first key (52) represents an access authorization, with different levels of access authorization resulting in different first keys (52), and saving the dynamic first key (52) in a first memory unit (26) of the coordinate measuring machine (12);
exporting (S12) the dynamic first key (52) from the coordinate measuring machine (12) to the user;
importing (S14) the dynamic first key (52) into the mobile terminal (14) by way of the user;
establishing (S16) a wireless connection (16) between the coordinate measuring machine (12) and the mobile terminal (14), wherein the wireless connection (16) is established in authenticated fashion by the coordinate measuring machine (12) and by the mobile terminal (14) using an identifier, which uniquely identifies the coordinate measuring machine (12), and the dynamic first key (52) for generating a coordinate measuring machine-specific authorization key (50) according to a generation prescription (56), which is saved in the coordinate measuring machine (12) and in the mobile terminal (14), wherein the dynamic first key (52) is coordinate measuring machine-specific and wherein the identifier is a coordinate measuring machine-specific static second key (54).

11. Method according to Claim 10, wherein the method further includes:
importing the static second key (54) into the mobile terminal (14) by way of the user;
generating the coordinate measuring machine-specific authorization key by the coordinate measuring machine (12) and the mobile terminal (14) according to the generation prescription (56) and on the basis of the dynamic first key (52) and the static second key; and
saving the authorization key (50) in the coordinate measuring machine (12) and in the mobile terminal (14);
authenticating the establishment of the wireless connection (16) by using the authorization key (50).

12. Method according to either of Claims 10 and 11, wherein the steps of importing the keys (52, 54) include:
reading the dynamic first key (52) from the coordinate measuring machine (12) onto a data storage medium by way of the user;
reading the read dynamic first key (52) from the data storage medium into the mobile terminal (14); and
reading the static second key (54) by scanning the second static key (54), which is mounted on the coordinate measuring machine (12) in freely accessible fashion, by means of the mobile terminal (14).

## Revendications

1. Système de mesure de coordonnées (10) destiné à l'accouplement et à la connexion fiables et intelligents d'un terminal mobile (14) à un appareil de mesure de coordonnées (12) monté en position fixe, comprenant :
un appareil de mesure de coordonnées (12) monté en position fixe, qui possède : un système de mesure (20) ; une unité d'interprétation et de commande (22) pourvue d'une première unité de traitement de données (24) ; une première unité à mémoire (26) destinée à enregistrer des données, des paramètres et des programmes ; et une première unité d'émission/réception (28) pour une communication sans fil ; et
un terminal mobile (14), qui est disposé de manière séparée physiquement de l'appareil de mesure de coordonnées (12) et de manière mobile par rapport à celui-ci et qui est conçu pour commander l'appareil de mesure de coordonnées (12) et/ou pour afficher des données de l'appareil de mesure de coordonnées (12) par un utilisateur, le terminal mobile (14) comprenant : une deuxième unité de traitement de données (30) ; une deuxième unité à mémoire (32) destinée à enregistrer des données et des programmes ; et une deuxième unité d'émission/réception (34) pour la communication sans fil ;
l'appareil de mesure de coordonnées (12) et le terminal mobile (14) étant conçus pour établir une liaison sans fil (16) authentifiée destinée à l'échange de données entre l'appareil de mesure de coordonnées (12) et le terminal mobile (14) ;
un identificateur, qui identifie univoquement l'appareil de mesure de coordonnées (12), ainsi qu'une première clé dynamique (52) étant associés à l'appareil de mesure de coordonnées (12), la première clé dynamique (52) représentant une autorisation d'accès, des niveaux d'autorisation d'accès différents résultant en des premières clés (52) différentes ; la première clé dynamique (52) étant spécifique à l'appareil de mesure de coordonnées et l'identificateur étant une deuxième clé statique (54) spécifique à l'appareil de mesure de coordonnées ;
le terminal mobile (14) étant en outre conçu pour interroger la première clé dynamique (52) auprès de l'utilisateur, la première clé dynamique (52) étant utilisée pour l'authentification lors de l'établissement de la liaison sans fil (16) ;
l'unité d'interprétation et de commande (22) étant conçue pour générer une clé d'autorisation (50) spécifique à l'appareil de mesure de coordonnées conformément à une prescription de génération (56), qui est stockée dans la première unité à mémoire (26), en se basant sur la première clé dynamique (52) et la deuxième clé statique (54), et stocker la clé d'autorisation (50) générée dans la première unité à mémoire, la liaison sans fil (16) étant authentifiée à l'aide de la clé d'autorisation (50) ainsi générée ; et
le terminal mobile (14) étant conçu pour interroger la deuxième clé statique (54) et ensuite, en connaissant la première clé dynamique (52) et la deuxième clé statique (54), générer la même clé d'autorisation (50) conformément à la prescription de génération (56), laquelle est également stockée dans la deuxième unité à mémoire (32), et la stocker dans la deuxième unité à mémoire (32) pour l'établissement authentifié de la liaison sans fil (16).

2. Système selon la revendication 1, la deuxième clé statique (54) représentant un type d'appareil de l'appareil de mesure de coordonnées (12), un numéro de série de l'appareil de mesure de coordonnées (12), une date de fabrication de l'appareil de mesure de coordonnées, un lieu de fabrication de l'appareil de mesure de coordonnées (12) et/ou un numéro SAP de l'appareil de mesure de coordonnées (12).

3. Système selon l'une des revendications 1 et 2, la deuxième clé statique (54) identifiant univoquement la liaison sans fil (16).

4. Système selon l'une des revendications 1 à 3, la première clé dynamique (54) étant un mot de passe alphanumérique et/ou un fichier de signature.

5. Système selon l'une des revendications 1 à 4, la deuxième clé statique (54) étant incorporée dans un code QR (40) lisible optiquement et/ou dans une puce NFC (42) ou une puce RFID de manière lisible électroniquement, le code QR (40) et/ou la puce NFC (42) étant apposé(s) au niveau de l'appareil de mesure de coordonnées (12) et le terminal mobile (14) possédant une unité de lecture (44) qui est conçue pour lire le code QR (40) et/ou la puce NFC (42) ou la puce RFID.

6. Système selon l'une des revendications 1 à 5, le terminal mobile (14) possédant un port de clé par le biais duquel peut être importée la première clé dynamique (52) délivrée par l'appareil de mesure de coordonnées (12), et l'appareil de mesure de coordonnées (12) possédant un port de clé supplémentaire par le biais duquel peut être exportée la première clé dynamique (52).

7. Système selon l'une des revendications 1 à 6, l'unité d'interprétation et de commande (22) possédant un dispositif d'interprétation (62) et un dispositif de commande (60), le dispositif d'interprétation (62) étant de préférence disposé à distance du système de mesure (20) et du dispositif de commande (60).

8. Appareil de mesure de coordonnées, comprenant :
un système de mesure (20) ;
une unité d'interprétation et de commande (22) pourvue d'une première unité de traitement de données (24) ;
une première unité à mémoire (26) destinée à enregistrer des données, des paramètres et des programmes ; et
une première unité d'émission/réception (28) pour une communication sans fil ;
l'appareil de mesure de coordonnées (12) étant conçu pour établir une liaison sans fil (16) authentifiée destinée à l'échange de données entre l'appareil de mesure de coordonnées (12) et un terminal mobile (14) ;
un identificateur, qui identifie univoquement l'appareil de mesure de coordonnées (12), ainsi qu'une première clé dynamique (52) étant associés à l'appareil de mesure de coordonnées (12), la première clé dynamique (52) représentant une autorisation d'accès, des niveaux d'autorisation d'accès différents résultant en des premières clés (52) différentes ; la première clé dynamique (52) étant spécifique à l'appareil de mesure de coordonnées et l'identificateur étant une deuxième clé statique (54) spécifique à l'appareil de mesure de coordonnées ;
l'unité d'interprétation et de commande (22) étant conçue pour générer une clé d'autorisation (50) spécifique à l'appareil de mesure de coordonnées conformément à une prescription de génération (56), qui est stockée dans la première unité à mémoire (26), en se basant sur la première clé dynamique (52) et la deuxième clé statique (54), et stocker la clé d'autorisation (50) générée dans la première unité à mémoire, la liaison sans fil (16) étant authentifiée à l'aide de la clé d'autorisation (50) ainsi générée.

9. Terminal mobile (14), qui est disposé de manière séparée physiquement d'un appareil de mesure de coordonnées (12) et de manière mobile par rapport à celui-ci et qui est conçu pour commander l'appareil de mesure de coordonnées (12) et/ou pour afficher des données de l'appareil de mesure de coordonnées (12) par un utilisateur, le terminal mobile (14) comprenant :
une unité de traitement de données (30) ;
une unité à mémoire (32) destinée à enregistrer des données et des programmes ; et
une unité d'émission/réception (34) pour la communication sans fil ;
le terminal mobile (14) étant conçu pour établir une liaison sans fil (16) authentifiée destinée à l'échange de données entre l'appareil de mesure de coordonnées (12) et le terminal mobile (14) ;
le terminal mobile (14) étant en outre conçu pour interroger une première clé dynamique (52) auprès de l'utilisateur, la première clé dynamique (52) étant utilisée pour l'authentification lors de l'établissement de la liaison sans fil (16), la première clé dynamique (52) étant associée à l'appareil de mesure de coordonnées (12), la première clé dynamique (52) représentant une autorisation d'accès, des niveaux d'autorisation d'accès différents résultant en des premières clés (52) différentes, la première clé dynamique (52) étant spécifique à l'appareil de mesure de coordonnées et un identificateur, qui est associé à l'appareil de mesure de coordonnées, étant une deuxième clé statique (54) spécifique à l'appareil de mesure de coordonnées ;
le terminal mobile (14) étant en outre conçu pour interroger la deuxième clé statique (54) et ensuite, en connaissant la première clé dynamique (52) et la deuxième clé statique (54), générer une clé d'autorisation (50) conformément à une prescription de génération (56) qui est stockée dans l'unité à mémoire (32), et la stocker dans l'unité à mémoire (32) pour l'établissement authentifié de la liaison sans fil (16) .

10. Procédé d'accouplement et de connexion fiables et intelligents d'un terminal mobile (14) à un appareil de mesure de coordonnées (12) monté en position fixe, comprenant les étapes suivantes :
définition (S10) d'une première clé dynamique (52), la première clé dynamique (52) représentant une autorisation d'accès, des niveaux d'autorisation d'accès différents résultant en des premières clés (52) différentes, et stockage de la première clé dynamique (52) dans une première unité à mémoire (26) de l'appareil de mesure de coordonnées (12) ;
exportation (S12) de la première clé dynamique (52) de l'appareil de mesure de coordonnées (12) à l'utilisateur ;
importation (S14) de la première clé dynamique (52) dans le terminal mobile (14) par l'utilisateur ;
établissement (S16) d'une liaison sans fil (16) entre l'appareil de mesure de coordonnées (12) et le terminal mobile (14), l'établissement de la liaison sans fil (16) étant effectué d'une manière authentifié par l'appareil de mesure de coordonnées (12) ainsi que par le terminal mobile (14) en utilisant un identificateur, qui identifie univoquement l'appareil de mesure de coordonnées (12), ainsi que la première clé dynamique (52) en vue de générer une clé d'autorisation (50) spécifique à l'appareil de mesure de coordonnées conformément à une prescription de génération (56), qui est stockée dans l'appareil de mesure de coordonnées (12) et dans le terminal mobile (14), la première clé dynamique (52) étant spécifique à l'appareil de mesure de coordonnées et l'identificateur étant une deuxième clé statique (54) spécifique à l'appareil de mesure de coordonnées.

11. Procédé selon la revendication 10, le procédé comprenant en outre :
l'importation de la deuxième clé statique (54) dans le terminal mobile (14) par l'utilisateur ;
la génération de la clé d'autorisation spécifique à l'appareil de mesure de coordonnées par l'appareil de mesure de coordonnées (12) et le terminal mobile (14) en se basant sur la première clé dynamique (52) et la deuxième clé statique conformément à la prescription de génération (56) ; et
le stockage de la clé d'autorisation (50) dans l'appareil de mesure de coordonnées (12) et dans le terminal mobile (14) ;
l'authentification de l'établissement de la liaison sans fil (16) en utilisant la clé d'autorisation (50).

12. Procédé selon l'une des revendications 10 ou 11, les étapes d'importation des clés (52, 54) comprenant :
la lecture de la première clé dynamique (52) depuis l'appareil de mesure de coordonnées (12) sur un support d'enregistrement de données par l'utilisateur ;
le chargement de la première clé dynamique (52) lue du support d'enregistrement de données dans le terminal mobile (14) ; et
le chargement de la deuxième clé statique (54) par lecture par balayage de la deuxième clé statique (54), laquelle est apposée de manière accessible librement sur l'appareil de mesure de coordonnées (12), au moyen du terminal mobile (14).
